# EUROPÄISCHE PATENTSCHRIFT

(11) **EP 2 508 056 B1**
(45) Veröffentlichungstag und Bekanntmachung des Hinweises auf die Patenterteilung: **14.05.2014**
(21) Anmeldenummer: 12158570.7
(22) Anmeldetag: 08.03.2012
(51) Int. Cl.: A01B 59/00, B60D 1/62

(54) **Ablage- und Haltevorrichtung für abgekoppelte Leitungen für mobile Arbeitsmaschinen und auswechselbare Ausrüstungen**
Storage and holding device for disconnected lines for mobile working machines and exchangeable equipments
Dispositif de dépôt et de retenue pour conduites désolidarisées pour machines de travail mobiles et équipements échangeables

(30) Priorität: 03.04.2011 DE 102011016617
(43) Veröffentlichungstag der Anmeldung: 10.10.2012
(73) Patentinhaber: CLAAS Saulgau GmbH, 88348 Bad Saulgau (DE)
(72) Erfinder: Ober, Martin, 78736 Epfendorf-Trichtingen (DE); Berger, Matthias, 88284 Wolpertswende (DE)

(56) Entgegenhaltungen:
- US-A- 3 176 257
- US-A- 4 738 641
- US-A- 5 660 408

## Beschreibung

### Beschreibung

Die Erfindung betrifft eine Ablage- und Haltevorrichtung für abgekoppelte Fluidleitungen für mobile Arbeitsmaschinen und auswechselbare Ausrüstungen gemäß dem Oberbegriff des Anspruches 1. Eine derartige Vorrichtung ist z.B. aus US 5 660 408 bekannt.

### Stand der Technik

In der Landtechnik beispielsweise dominiert der Traktor als Transportfahrzeug, aber auch zugleich als Antriebseinheit für angebaute oder gezogene auswechselbare Ausrüstungen. Traktor und auswechselbare Ausrüstung, wie beispielsweise Mähwerke, Wender, Schwader, Ballenpressen, ergeben gekoppelt und zusammenwirkend eine mobile Arbeitsmaschine für den landtechnischen Einsatz. Der Traktor verfügt über Schnittstellen zur Energieübertragung an die auswechselbare Ausrüstung, wie beispielsweise die Zapfwelle, die elektrische Steckdose oder auch die hydraulischen Zapfstellen zur Ankopplung hydraulischer Antriebselemente. Diese hydraulischen Zapfstellen sind im Regelfall traktorseitig als ortsfest angebrachte Kupplungsmuffen ausgebildet und das Gegenstück als Kupplungselement sind die Kupplungsstecker, die endseitig an Hydraulikschläuchen angebracht sind.

Werden die auswechselbaren Ausrüstungen vom Traktor abgekoppelt und geparkt, so müssen die Hydraulikschläuche ebenfalls abgekoppelt und abgelegt werden. Dazu existieren Ablagevorrichtungen in Form sogenannter Blindkupplungsmuffen. Damit die Kupplungsstecker der Hydraulikschläuche nicht verschmutzen gibt es sogenannte Blindkupplungsmuffen, die an den auswechselbaren Ausrüstungen, d.h. geräteseitig, angebracht sind und in die die Kupplungsstecker eingeführt und von diesen während des Parkens gehalten werden. Da die Kupplungsstecker in ihren Abmessungen je Durchflussmenge des Hydrauliköls baugrößenabhängig variieren müssen auch die Blindstecker oder sonstige Haltevorrichtungen entsprechend der Baugröße den Kupplungssteckern angepasst sein.

### Aufgabenstellung

Hier setzt die Aufgabe der Erfindung an mit dem Ziel, eine verbesserte, leicht zu handhabende, verschmutzungssichere Ablagevorrichtung für abgekoppelte Leitungen, insbesondere Hydraulikschlauchleitungen, vorzuschlagen.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung betrifft eine Ablage- und Haltevorrichtung für flexible und abgekoppelte Leitungen der Elektrik, Hydraulik oder Pneumatik und sie beinhaltet den Vorteil, dass die Halteelemente unabhängig vom Nenndurchmesser einer Leitung, ob als Strom- und/oder Signalleitung oder als Schlauchleitung ihre Funktion erfüllen. Aber unabhängig davon bietet die Lösung erheblich sogenannte Händlingsvorteile, da die Kupplungselemente in keine Steckverbindung eingeführt werden müssen.

Die Haltevorrichtung basiert auf der Wirkung der magnetischen Kraft eines Dauermagneten. Die Kupplungselemente von Leitungen sind entweder als Kupplungsstecker oder Kupplungsmuffen und aus ferromagnetischem Werkstoff ausgebildet, so dass diese mit dem Dauermagneten als Halteelement eine kraftschlüssige Verbindung eingehen. In besonders vorteilhafter Weise ist das Halteelement und damit der Dauermagnet von einer Gelenkverbindung aufgenommen, so dass sich der Dauermagnet in der momentanen Lage und Ausrichtung des Kupplungselements beim Ablegen der Leitung auf diesen zuschnappend anpassen kann. Dadurch stellt sich momentan zumindest ein linienförmiger Kontakt zwischen dem Dauermagneten und dem Kupplungselement ein, der bereits eine hinreichende Haltekraft zwischen diesen beiden Elementen sicherstellt.

In einer weiteren Ausgestaltung der Erfindung kann die Ablage- und Haltevorrichtung mehrere in einer Reihe angeordnete Halteelemente umfassen, so dass diese mehrere Leitungen, auch unterschiedlicher Nenndurchmesser, unabhängig davon, ob diese Kupplungsstecker oder Kupplungsmuffen an ihren Enden aufweisen, aufnehmen kann.

Um die Kupplungsstecker oder Kupplungsmuffen im abgelegten Zustand vor Beschädigungen durch äußere Einflüsse, wie Verschmutzung oder Regenwasser, zu schützen, sind die Halteelemente in einer Halterung und in einer bevorzugten Ausgestaltung einem offenen Gehäuse mit einer Durchgangsöffnung, angeordnet, so dass diese vor äußeren unerwünschten Einwirkungen geschützt sind.

Diese erfindungsgemäße Ablage- und Haltevorrichtung kann Teil einer Maschine oder einer auswechselbaren Einrichtung im Bereich der Landtechnik, aber auch im Bereich der Kommunaltechnik oder im Bereich der Baumaschinentechnik sein und ist selbst auf diese Bereiche nicht eingeschränkt.

Anhand der Figurendarstellungen Fig.1 bis Fig.12 ist die Erfindung beispielhaft dargestellt und erläutert.

Es zeigen:
- Fig.1: perspektivische Darstellung der Ablage- und Haltevorrichtung mit abgekoppelten bzw. abgelegten Leitungen
- Fig.2: perspektivische Darstellung der Ablage- und Haltevorrichtung analog Fig. 1 aber ohne abgekoppelte bzw. abgelegte Leitungen
- Fig.3: Vorderansicht der Ablage- und Haltevorrichtung
- Fig.4: Seitenansicht der Ablage- und Haltevorrichtung
- Fig.5: Schnitt A-A gemäß Fig.3 mit gestrecktem Halteelement
- Fig.5a: einen vergrößerten Ausschnitt aus Fig.5
- Fig.6: Schnitt A-A gemäß Fig.3 mit abgewinkeltem Halteelement
- Fig.6a: einen vergrößerten Ausschnitt aus Fig.6
- Fig.7: Schnitt A-A gemäß Fig.3 mit gestrecktem Halteelement und abgelegter Hydraulikschlauchleitung mit Kupplungsstecker
- Fig.8: Schnitt A-A gemäß Fig.3 mit abgewinkeltem Halteelement und abgelegter Hydraulikschlauchleitung mit Kupplungsstecker
- Fig.9: Schnitt A-A gemäß Fig.3 mit gestrecktem Halteelement und abgelegter Hydraulikschlauchleitung mit Kupplungsstecker mit größerem Nenndurchmesser als in Fig. 7 dargestellt
- Fig.10: Schnitt A-A gemäß Fig.9 mit abgewinkeltem Halteelement und abgelegter Hydraulikschlauchleitung mit Kupplungsstecker
- Fig.11: Schnitt A-A gemäß Fig.9 mit gestrecktem Halteelement und abgelegter Hydraulikschlauchleitung mit Kupplungsmuffe
- Fig.12: Schnitt A-A gemäß Fig.11 mit abgewinkeltem Halteelement und abgelegter Hydraulikschlauchleitung mit Kupplungsmuffe

### Ausführungsbeispiel

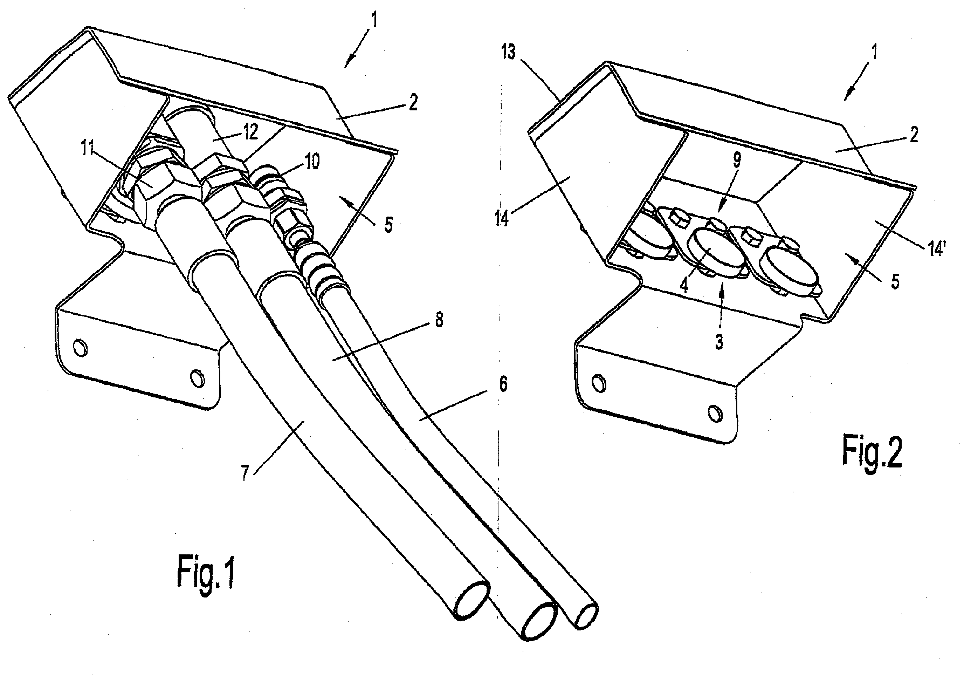

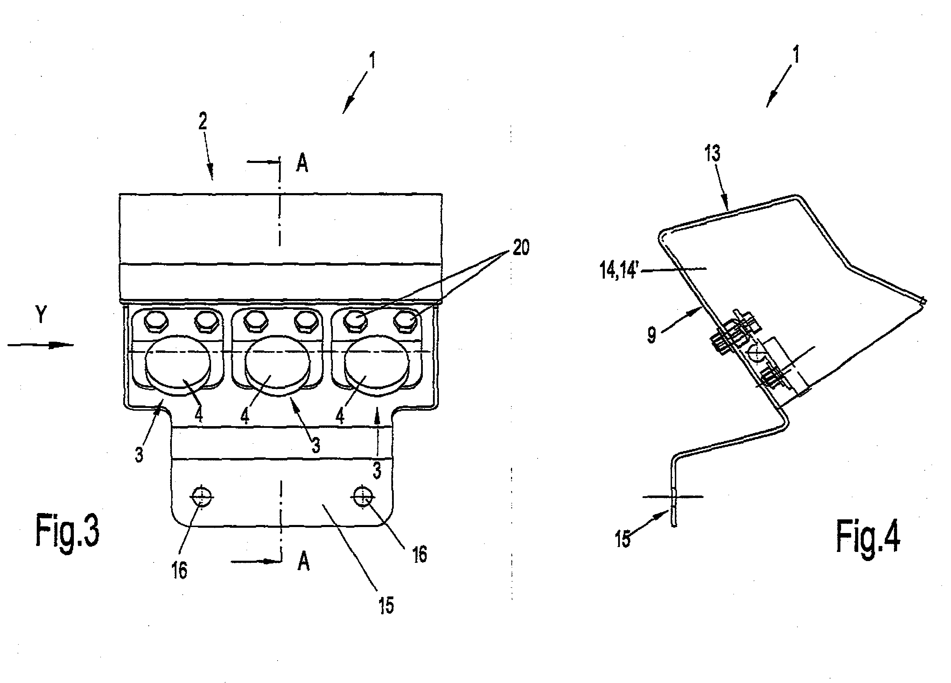

Fig.1 zeigt eine perspektivische Darstellung der Ablage- und Haltevorrichtung 1 mit abgekoppelten bzw. abgelegten und gehaltenen Leitungen 6,7,8 bzw. hydraulischen Schlauchleitungen 6,7,8 und Fig.2 zeigt analog Fig.1 ebenfalls in einer perspektivischen Darstellung die Ablage- und Haltevorrichtung 1 aber ohne die Leitungen bzw. hydraulischen Schlauchleitungen. Fig.3 zeigt die Vorderansicht der Ablage- und Haltevorrichtung 1 und Fig.4 die Seitenansicht der Ablage- und Haltevorrichtung 1 gemäß Fig. 3 in Richtung Y gesehen.

Die Ablage- und Haltevorrichtung 1 besteht im Wesentlichen aus einem Gehäuse 2 und wenigstens einem Halteelement 3 mit einem Dauermagneten 4. Das dargestellte Ausführungsbeispiel weist insgesamt drei Halteelemente 3 auf, wobei die Anzahl der Halteelemente 3 keineswegs auf drei beschränkt ist. Die Halteelemente 3 sind mittels Verschraubungen an der Rückwand 9 des Gehäuses befestigt. Das Gehäuse 2 weist eine Durchgangsöffnung 5 auf, durch die die freien Enden der abgekoppelten hydraulischen Schlauchleitungen 6,7,8 hindurchgeführt werden können. In dem Ausführungsbeispiel sind die Schlauchleitungen 6,7 endseitig mit einem Kupplungsstecker 10, 11 und ist die Schlauchleitung 8 endseitig mit einer Kupplungsmuffe 12 ausgestattet. Dabei soll die Schlauchleitung 6 einen kleineren Nenndurchmesser als die übrigen Schlauchleitungen 7 und 8 aufweisen. Das bedeutet, dass die Baugröße des Kupplungssteckers 10 eine kleinere ist als die des Kupplungssteckers 11, wobei in dem Ausführungsbeispiel der Kupplungsstecker 11 und die Kupplungsmuffe 12 der gleichen Baugröße angehören sollen. Diese dargestellten Baugrößenunterschiede sind deshalb von Bedeutung, um klar zu stellen, dass die Halteelemente nicht nur auf eine bestimmte Baugröße ausgelegt sind und dass diese gleichermaßen Kupplungsstecker 10,11 wie Kupplungsmuffen 12 kraftschlüssig durch die magnetische Haltekraft der Dauermagneten 4 aufnehmen können.

Das Gehäuse 2 weist weiterhin die Seitenwände 14,14', die Dachabdeckung 13 und einen Flansch 15 mit den Durchgangsbohrungen 16 auf. Letztere dienen dazu, die gesamte Ablage- und Haltevorrichtung 1 an einer Maschine oder einem Gerät fest anzuschrauben. In der Praxis ist es sinnvoll, dass die Durchgangsöffnung 5 der Ablage- und Haltevorrichtung 1 überwiegend dem Erdboden zugewandt ist, damit bei der Lagerung der Maschinen oder Vorrichtungen im Freien die Kupplungsstecker 10,11 bzw. Kupplungsmuffe 12 keinem direkten Kontakt mit dem Regenwasser ausgesetzt sind. Diese Gebrauchslage ist beispielsweise in der Fig. 3 und Fig.4 dargestellt.

Ein Halteelement 3 besteht im Einzelnen weiterhin aus einem Fassungselement 17 zur Aufnahme des Dauermagneten 4 und einem Flanschelement 18 zum Anschrauben an die Rückwand 9 des Gehäuses 2 mittels einer Schraubverbindung 20.

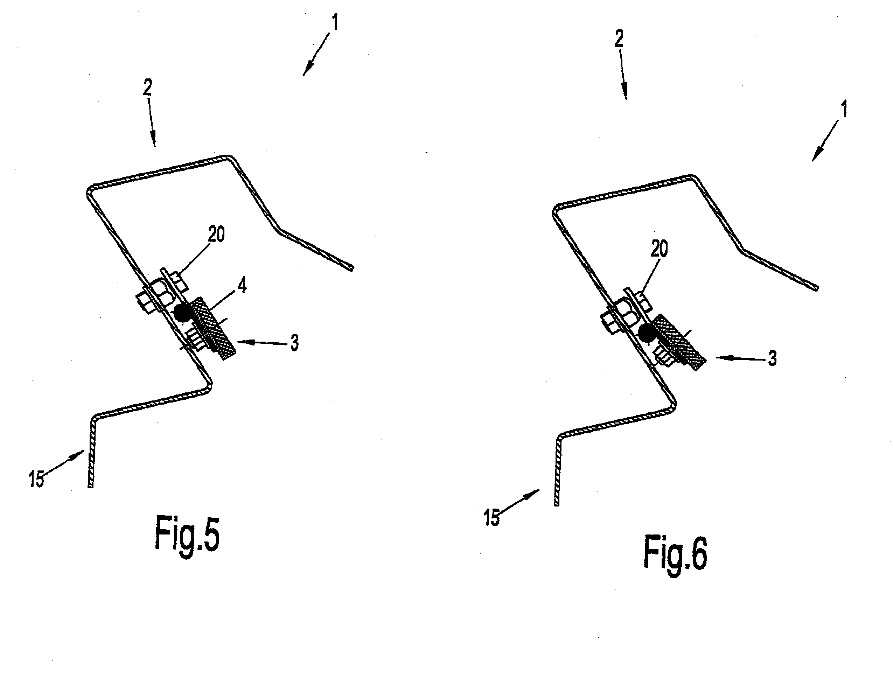

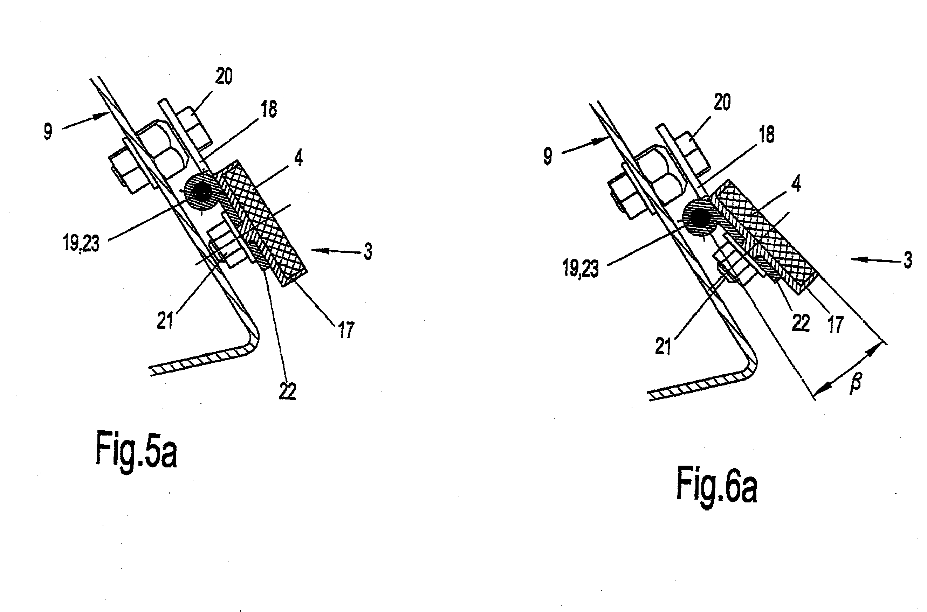

Fig.5 zeigt den Schnitt A-A gemäß Fig.3 mit gestrecktem Halteelement und Fig.6 zeigt den Schnitt A-A gemäß Fig.3 jedoch mit abgewinkeltem Halteelement 3.

Fig.5a zeigt einen vergrößerten Ausschnitt aus Fig.5 und Fig.6a einen vergrößerten Ausschnitt aus Fig.6. Beide Figuren zeigen das Halteelement 3, und zwar Fig.5a das Halteelement 3 im gestreckten Zustand und Fig.6a das Halteelement 3 im abgewinkelten Zustand. Das Halteelement 3 besteht im Wesentlichen aus dem Fassungselement 17, welches den Dauermagnet 4 in einer festen Verbindung mit diesem aufnimmt, dem Scharnierflansch 22, dem Flanschelement 18 und der Gelenkverbindung 19 mit seiner Gelenkachse 23. Der Dauermagnet 4 ist vorzugsweise als Rundmagnet ausgebildet und er findet seinen Sitz in dem als Rundteil ausgebildeten Fassungselement 17, welches endseitig eine Schraubverbindung 21 aufweist, mit der das Fassungselement 17 mit dem Scharnierflansch 22 verschraubt ist. Das Fassungselement 17 ist mit dem Flanschelement 18 in der Gelenkverbindung 19, ausgebildet als Scharnier, verbunden. Das Flanschelement 18 ist mit der Schraubverbindung 20 mit der Rückwand 9 des Gehäuses 2 verschraubt. Somit kann der gelenkige Teil des Halteelements 3, bestehend aus dem Fassungselement 17, dem Dauermagnet 4 und dem Scharnierflansch 22, eine Schwenkbewegung mit einem Schwenkwinkel β , wie in der Fig. 6a dargestellt, um die Gelenkachse 23 ausführen. Fig.5a hingegen zeigt die gestreckte Lage der Scharnierverbindung mit dem Winkel β = Null Winkelgrad.

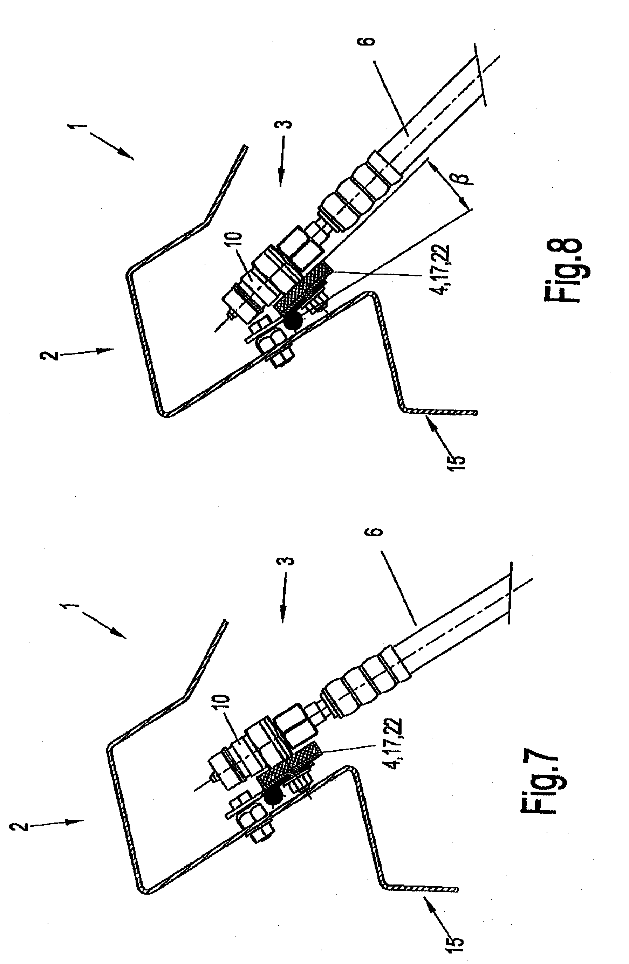

Fig.7 zeigt analog Fig. 5 den Schnitt A-A gemäß Fig.3 mit gestrecktem Halteelement 3, d.h. mit dem Winkel β = Null Winkelgrad, ergänzend jedoch mit abgelegter Hydraulikschlauchleitung 6 mit endseitigem Kupplungsstecker 10, abgehängt an dem Dauermagnet 4 und Fig.8 zeigt analog Fig. 6 die gleiche Situation, jedoch mit abgewinkeltem Halteelement 3 mit einem Schwenkwinkel β größer Null Winkelgrad.

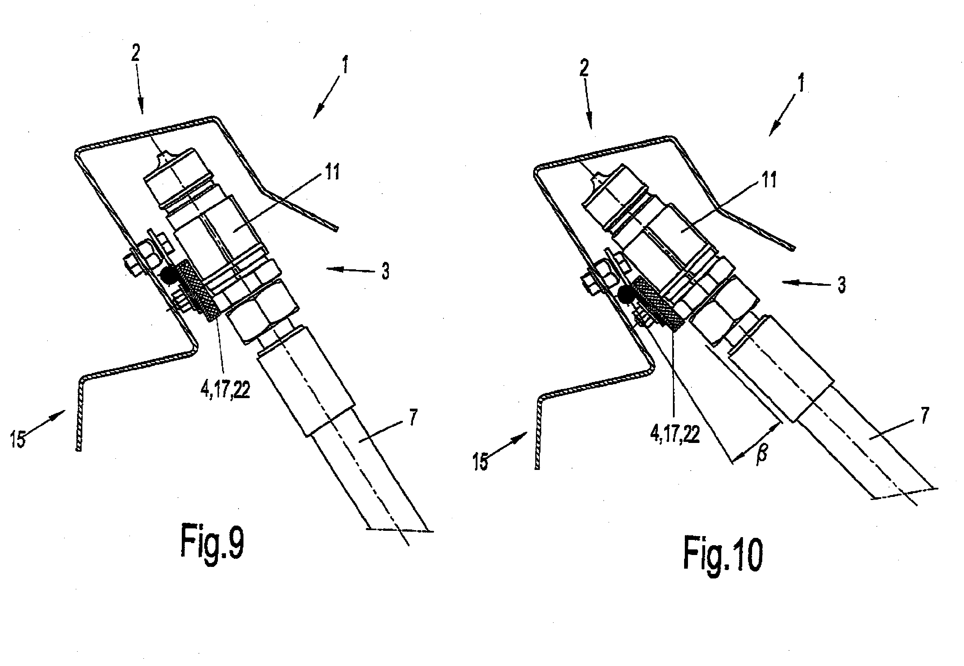

Fig.9 zeigt analog Fig. 7 den Schnitt A-A gemäß Fig.3 mit gestrecktem Halteelement 3, d.h. mit dem Winkel β = Null Winkelgrad mit abgelegter Hydraulikschlauchleitung 7 mit größerem Nenndurchmesser als in Fig.7 dargestellt und ebenfalls mit endseitigem Kupplungsstecker 11, abgehängt an dem Dauermagnet 4, und Fig.10 zeigt analog Fig. 8 die gleiche Situation, jedoch mit abgewinkeltem Halteelement 3 mit einem Schwenkwinkel β größer Null Winkelgrad.

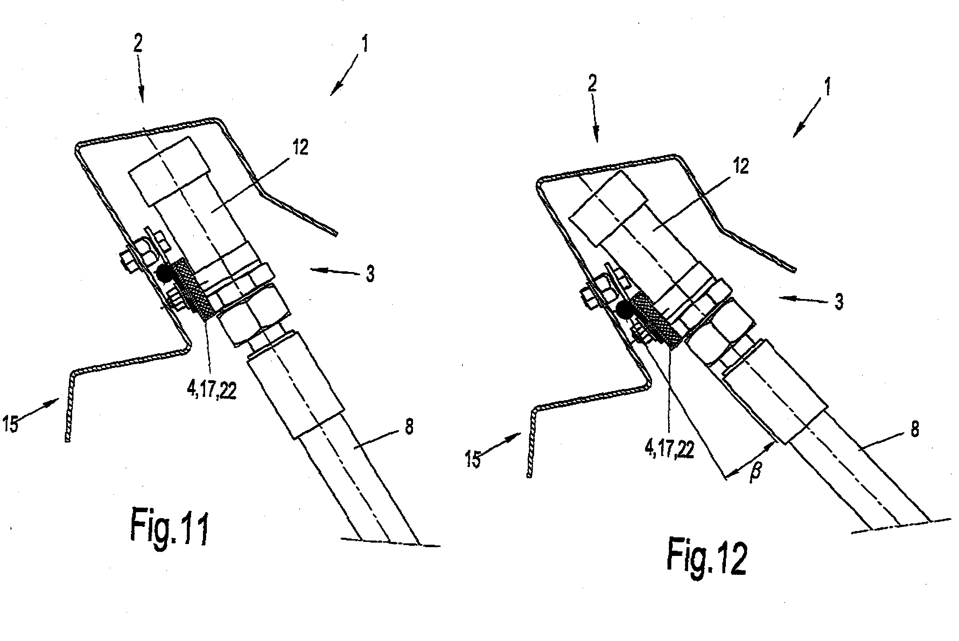

Fig.11 zeigt analog Fig. 7 den Schnitt A-A gemäß Fig.3 mit gestrecktem Halteelement 3, d.h. mit dem Winkel β = Null Winkelgrad mit abgelegter Hydraulikschlauchleitung 8 mit größerem Nenndurchmesser als in Fig.7 dargestellt aber mit endseitiger Kupplungsmuffe 12, abgehängt an dem Dauermagnet 4, und

Fig.12 zeigt analog Fig. 10 die gleiche Situation, jedoch mit abgewinkeltem Halteelement 3 mit einem Schwenkwinkel β größer Null Winkelgrad.

### Bezugszeichenliste

- 1: Ablage- und Haltevorrichtung
- 2: Halterung, Gehäuse
- 3: Halteelement
- 4: Dauermagnet
- 5: Durchgangsöffnung
- 6: flexible Leitung, Schlauchleitung
- 7: flexible Leitung, Schlauchleitung
- 8: flexible Leitung, Schlauchleitung
- 9: Rückwand
- 10: Kupplungselement, Kupplungsstecker
- 11: Kupplungselement, Kupplungsstecker
- 12: Kupplungselement, Kupplungsmuffe
- 13: Dachabdeckung
- 14,14': Seitenwand
- 15: Flansch
- 16: Durchgangsbohrung
- 17: Fassungselement
- 18: Flanschelement, Befestigungsflansch
- 19: Gelenkverbindung
- 20: Schraubverbindung
- 21: Schraubverbindung
- 22: Scharnierflansch
- 23: Gelenkachse
- β: Schwenkwinkel

## Patentansprüche

1. Ablage- und Haltevorrichtung (1) für flexible und abgekoppelte Leitungen der Elektrik, Hydraulik oder Pneumatik mit endseitig angebrachten Kupplungselementen und insbesondere Kupplungssteckern oder Kupplungsmuffen, **dadurch gekennzeichnet, dass** die Ablage- und Haltevorrichtung (1) wenigstens ein Halteelement (3) mit einem Dauermagneten (4) zur Halterung einer abgekoppelten Leitung (6,7,8) aufweist.

2. Ablage- und Haltevorrichtung nach Anspruch 1, **dadurch gekennzeichnet, dass** das Halteelement (3) eine Gelenkverbindung (19) aufweist.

3. Ablage- und Haltevorrichtung nach Anspruch 1, **dadurch gekennzeichnet, dass** das Halteelement (3) einen Befestigungsflansch (18) und einen Scharnierflansch (22) aufweist, wobei der Befestigungsflansch (18) und der Scharnierflansch (22) durch eine Gelenkverbindung (19) schwenkbeweglich miteinander verbunden sind.

4. Ablage- und Haltevorrichtung nach Anspruch 1 bis 3, **dadurch gekennzeichnet, dass** der schwenkbewegliche Teil des Halteelements (3) den Dauermagneten (4) aufnimmt.

5. Ablage- und Haltevorrichtung nach Anspruch 1 und 2, **dadurch gekennzeichnet, dass** die Ablage- und Haltevorrichtung (1) mehrere nebeneinander liegende vorzugsweise in einer Reihe angeordnete Halteelemente (3) aufweist.

6. Ablage- und Haltevorrichtung nach Anspruch 1 bis 3, **dadurch gekennzeichnet, dass** die Ablage- und Haltevorrichtung (1) eine Halterung (2) zur Aufnahme des wenigstens einen Halteelements (3) aufweist.

7. Ablage- und Haltevorrichtung nach Anspruch 6, **dadurch gekennzeichnet, dass** die Halterung (2) zugleich als Schutzeinrichtung der Kupplungselemente (10,11,12) vor Verschmutzungen oder Beschädigungen durch äußere Einflüsse ausgebildet ist.

8. Ablage- und Haltevorrichtung nach Anspruch 1, **dadurch gekennzeichnet, dass** diese Teil einer Maschine oder Vorrichtung im Bereich der Landtechnik ist.

9. Ablage- und Haltevorrichtung nach Anspruch 1, **dadurch gekennzeichnet, dass** diese Teil einer Maschine oder Vorrichtung im Bereich der Kommunaltechnik ist.

10. Ablage- und Haltevorrichtung nach Anspruch 1, **dadurch gekennzeichnet, dass** diese Teil einer Maschine oder Vorrichtung im Bereich der Baumaschinentechnik ist.

## Claims

1. A storage and holding device (1) for flexible and uncoupled lines in electrics, hydraulics or pneumatics having coupling elements fitted at the end and in particular male coupling elements or female coupling elements, **characterised in that** the storage and holding device (1) has at least one holding element (3) with a permanent magnet (4) for holding an uncoupled line (6, 7, 8).

2. A storage and holding device according to claim 1 **characterised in that** the holding element (3) has a pivot connection (19).

3. A storage and holding device according to claim 1 **characterised in that** the holding element (3) has a fixing flange (18) and a hinge flange (22), wherein the fixing flange (18) and the hinge flange (22) are pivotably moveably connected together by a pivot connection (19).

4. A storage and holding device according to claims 1 to 3 **characterised in that** the pivotably moveable part of the holding element (3) carries the permanent magnet (4).

5. A storage and holding device according to claim 1 and claim 2 **characterised in that** the storage and holding device (1) has a plurality of holding elements (3) which are disposed in mutually juxtaposed relationship and which are preferably arranged in a row.

6. A storage and holding device according to claims 1 to 3 **characterised in that** the storage and holding device (1) has a holder (2) for receiving the at least one holding element (3).

7. A storage and holding device according to claim 6 **characterised in that** the holder (2) is formed at the same time as a protective device for protecting the coupling elements (10, 11, 12) from fouling or damage by external influences.

8. A storage and holding device according to claim 1 **characterised in that** it is part of a machine or apparatus in the field of agricultural engineering.

9. A storage and holding device according to claim 1 **characterised in that** it is part of a machine or apparatus in the field of municipal services technology.

10. A storage and holding device according to claim 1 **characterised in that** it is part of a machine or apparatus in the field of construction machine technology.

## Revendications

1. Dispositif de dépôt et de retenue (1) pour conduites souples et désolidarisées de l'électricité, de l'hydraulique ou de la pneumatique, comprenant des éléments d'accouplement montés côté extrémité, et en particulier des fiches d'accouplement ou des manchons d'accouplement, **caractérisé en ce que** le dispositif de dépôt et de retenue (1) présente au moins un élément de retenue (3) doté d'un aimant permanent (4) pour tenir une conduite (6, 7, 8) désolidarisée.

2. Dispositif de dépôt et de retenue selon la revendication 1, **caractérisé en ce que** l'élément de retenue (3) présente une liaison articulée (19).

3. Dispositif de dépôt et de retenue selon la revendication 1, **caractérisé en ce que** l'élément de retenue (3) présente une bride de fixation (18) et une bride charnière (22), la bride de fixation (18) et la bride charnière (22) étant reliées l'une à l'autre de façon pivotante par une liaison articulée (19).

4. Dispositif de dépôt et de retenue selon les revendications 1 à 3, **caractérisé en ce que** la partie pivotante de l'élément de retenue (3) reçoit l'aimant permanent (4).

5. Dispositif de dépôt et de retenue selon les revendications 1 et 2, **caractérisé en ce que** le dispositif de dépôt et de retenue (1) présente plusieurs éléments de retenue (3) disposés les uns à côté des autres, de préférence en une rangée.

6. Dispositif de dépôt et de retenue selon les revendications 1 à 3, **caractérisé en ce que** le dispositif de dépôt et de retenue (1) présente un support (2) pour recevoir l'élément de retenue (2), au nombre d'au moins un.

7. Dispositif de dépôt et de retenue selon la revendication 6, **caractérisé en ce que** le support (2) est réalisé en même temps comme dispositif de protection des éléments d'accouplement (10, 11, 12) contre des saletés ou des détériorations dues à des influences extérieures.

8. Dispositif de dépôt et de retenue selon la revendication 1, **caractérisé en ce que** celui-ci fait partie d'une machine ou d'un dispositif dans le domaine de la technique agricole.

9. Dispositif de dépôt et de retenue selon la revendication 1, **caractérisé en ce que** celui-ci fait partie d'une machine ou d'un dispositif dans le domaine de la technique communale.

10. Dispositif de dépôt et de retenue selon la revendication 1, **caractérisé en ce que** celui-ci fait partie d'une machine ou d'un dispositif dans le domaine de la technique des machines de chantier.
